# EUROPEAN PATENT SPECIFICATION

(11) **EP 3 373 720 B1**
(45) Date of publication and mention of the grant of the patent: **25.09.2019**
(21) Application number: 16809577.6
(22) Date of filing: 14.11.2016
(51) Int. Cl.: A01C 3/00, A01K 1/01, C02F 1/04, C02F 1/32, C02F 1/66, C02F 1/00, C02F 101/16, C02F 103/20

(54) **IMPROVED METHOD FOR TREATING A LIQUID WASTE FRACTION FROM ANIMAL WASTE**
VERBESSERTES VERFAHREN ZUR BEHANDLUNG VON FLÜSSIGKEITSABFALLTEILEN AUS TIERABFÄLLEN
PROCÉDÉ AMÉLIORÉ PERMETTANT DE TRAITER UNE FRACTION DE DÉCHETS LIQUIDES PROVENANT DE DÉCHETS ANIMAUX

(30) Priority: 12.11.2015 US 201562254565 P; 24.11.2015 EP 15196025
(43) Date of publication of application: 19.09.2018
(73) Proprietor: Waste 2 Green, LLC, Cocoa, FL 32926 (US)
(72) Inventor: WEGERIF, Daniel, Merritt Island, FL 32952 (US); DECKER, Edward, Titusville, FL 32780 (US); SHYE, Jason, Rockledge, FL 32955 (US); THOMSEN, Jes, 3500 Vaerlose (DK)
(74) Representative: AWA Denmark A/S
(86) International application number: PCT/US2016/061821
(87) International publication number: WO 2017/083818

(56) References cited:
- WO-A1-2005/009925
- WO-A1-2015/101941
- FR-A1- 2 557 758
- US-A- 3 865 568

## Description

The present invention relates to an improved process for downstream processing of a liquid waste fraction from mammalian waste, such as animal waste. More specifically the present invention provides an improved and simplified method for downstream processing of liquid fractions of mammalian waste, such as animal waste in which the nitrogen content is preserved.

Commercial utilisation of livestock in the production of meat from e.g. pig, cattle, or sheep produces large quantities of animal waste matter to be disposed.

Present methods of disposing animal waste matter include recycling thereof through the agricultural system e.g. by storage and spreading the animal waste matter such as animal manure on land, optionally spreading it on land after treatment thereof for removing excess polluting nutrients which cannot be absorbed in the soil. However, although such treatment methods provide improved disposable waste matter having reduced amounts of nutrients such as phosphorous, nitrogen-containing compounds, and accumulating minerals such as copper, the treated waste matter is still spread on the land. Consequently, lack of land sites with suitable capacity and risks of excess fertilisation or excess manure resulting in undesired pollution put an upper limit to the amount of treated animal waste matter that can or is allowed to be disposed this way. Additionally, removed nutrients and minerals in the waste matter treatment would have to be disposed. Consequently, there is a continued need for methods of treating mammalian, such as animal, waste matter in an efficient manner. There is also a need to preserve the nutrients in the waste matter and converting this to usable products and thereby providing sustainable ecosystems on large scale farms and plants.

Prior art describes methods for treating animal waste matter, for example PCT/DK2004/00513 discloses methods for obtaining the liquid fraction without degradation of the urea in the urine as well as further processes for utilizing the urea for various industrial purposes. PCT/DK2004/00513 describes reversible and irreversible inhibition of the liquid fraction of animal waste to ensure that the urea is not degraded by the faecal bacteria causing loss of nitrogen in the form of ammonia which evaporates. PCT/DK2004/00513 further describes treatment of the liquid after inhibition by separation by sedimentation or centrifugation followed by various filtration steps such as ultra-filtration to remove microorganisms and macromolecules, such as urease, nano-filtering to remove e.g. the added inhibitors and reverse osmosis to remove water and thereby concentrate the liquid in respect of the desired components, i.e. urea, and the ions such as potassium, sodium, calcium etc. These post inhibition steps provide a very clean urea fraction which is usable in subsequent industrial processing of the urea to e.g. urea formaldehyde; however, it is at the cost of losing nitrogen (urea) in the filtering processes.

The preservation of nitrogen is faced with two problems, avoiding degradation of urea by urease enzyme and once preserved recovery of the nitrogen in the upgrading process such as concentration. Hence, when the demand for nitrogen is high there still exists a need for downstream processes in which the liquid fraction of animal waste is recovered with increasing amounts of nitrogen source (urea). There is also a need for finding simple and cheap solutions for recovering the waste matter from the animals in order for the costs of doing so are lower than disposal costs and the costs of purchasing nutrients for e.g. fertilizers.

The object of the present invention is to solve one or more of the problems of the prior art.

Hence, the present invention provides a method for treating a liquid fraction of a waste matter from a mammal, such as an animal, or for preserving nitrogen in waste matter from a mammal, such as an animal, the method comprising
a) providing a liquid fraction of a waste matter from a mammal, such as an animal, said fraction being urea rich;
b) allowing the fraction to settle to provide a supernatant and a sediment;
c) feeding the supernatant to an evaporating unit; and
d) subjecting the supernatant to an evaporating step, wherein the evaporating step takes place at a pressure below atmospheric.

The present invention provides a simple and effective solution for providing recovered nitrogen in the form of urea. Contrary to most prior art methods where urea-nitrogen is lost during the final stages of processing and in particular in large scale processing causing an inadvertent loss of a nitrogen source that could be useful for a number of purposes, the method of the prior art preserves the nitrogen during the recovery and concentration. In a particular embodiment the pressure below atmospheric is between 1 to 20 kPa, e.g. 5 to 10 kPa. When the processing by evaporation of the liquid supernatant after sedimentation is performed at low pressure, i.e. under atmospheric, a number of benefits are obtained. First, the water evaporates at lower temperature which reduces the energy required to concentrate the nitrogen levels in the final solution and, second, the heating requirements are reduced which is found to reduce urea loss. Consequently, the method preserves and provides nitrogen in the form of urea to an unexpectedly higher degree than provided for in prior art methods.

Hence, low energy means of evaporation is used to reduce energy in the process and at the same time thermal or other degradation of the urea is avoided.

Consequently, the invention may also be seen as a method for preserving nitrogen in waste matter from animal, such as in liquid waste matter.

In an embodiment of the invention, the liquid fraction of a waste matter from a mammal, such as an animal, provided in the method is preferably inhibited, meaning that any urease activity in the liquid is inhibited.

In yet another embodiment, the liquid of step a) is provided by a method comprising the steps of
i) collecting waste matter from the mammal, such as an animal;
ii) inhibiting urease activity in the collected waste matter;
iii) separating the urease-activity inhibited waste matter to provide the urea-rich liquid fraction of a waste matter from a mammal such as an animal, and a urea-lean fraction.

The urea-lean fraction may be disposed of or further treated.

It is also contemplated that the liquid is inhibited before and/or after the sedimentation of step b) and/or after the evaporation of step d).

In yet a specific embodiment of providing the liquid the collected waste matter, exemplified when originating from animals, is collected from a barn in which a separation means is installed underneath a stable floor having slats and in which the separation means can be a conveyor belt or a pipe and scraper system, said conveyor belt or a pipe and scraper system conveying the solid waste matter out of the stables for processing in a continuous manner. In either arrangement, the liquid fraction is collected in a pipe or channel below the conveyor belt or scraper system. With such an arrangement the odour and environment in the barn is improved and furthermore the waste will be treated without undue holding. Such continuous separation and removal will minimize the degradation of urea to ammonia.

In a particular embodiment the conveyor belt is installed with a slight inclination, so that the inclination of the belt relative to the horizontal has an angle of 2° to 8°, preferably, 3° to 5°, more preferred 4°. This inclination of the belt has turned out to be a simple manner in which liquid and solid/semisolid waste matter is separated. Hence, the liquid substantially comprising urine will drain from the conveyor belt and is transported to a liquid treatment facility, whereas the solid is transported to a faecal treatment facility (solid).

Consequently, in an embodiment the waste matter of step i) or a) is substantially liquid and is collected as liquid waste matter drained from the inclining conveyor belt.

The inhibition of step ii) of the waste matter - regardless of being a mix of waste matter or substantially the liquid portion of the waste matter is obtained by inhibiting the waste matter by physical or chemical means or a combination of both.

Depending on the volume and composition of the waste matter it may be desirable to provide various means of inhibition to ensure that the urea is preserved. The physical inhibition may in an embodiment be an UV light e.g. a LED or Hg light source. It is known that UV, e.g. LED or Hg light sources, have an antibacterial/germicidal action in air and solution. It has also been shown to be able to control odour. It may be beneficial to apply UV light in at least two different wavelengths in order to cover a broader spectrum of contaminants. It is contemplated that the UV light source can be applied at any point of the process, particularly it is applied to the waste matter before or after sedimentation of step b) and/or before and/or after the evaporation of step d). Suitable light sources are known to the skilled person.

It is also contemplated that the inhibition is chemical and may be reversible and/or irreversible. The chemical inhibition is an efficient means for suitable inhibition such as described in WO2005/009925.

In a particular embodiment the chemical inhibition is reversible inhibition and it is obtained by adjusting the pH of the waste matter to pH ≤ 3 or pH ≥ 12. Surprisingly it has turned out that between these values a dramatic change in the urea degradation occurs. Hence, when pH rises slightly above 3 a significant urea degradation occurs and similarly when pH is lowered slightly below pH 12 the same significant degradation occurs. Hence, when it was previously believed that the most effective preservation of urea occurred near the iso-electric point of urease, the present inventors have unexpectedly found during experimentation that a more efficient inhibition in vivo and in vitro takes place at the preferred pH values.

In some embodiments the chemical inhibition in the range pH ≤ 3 or pH ≥ 12 is irreversible when the organisms producing the urease are destroyed by the addition of the acid and/or base.

In yet an embodiment the chemical inhibition is irreversible and the irreversible inhibition is obtained by use of one or more compounds selected among N-(n-butyl) thiophosphoric triamide (NBPT) (also known under the tradename Agrotain®), salicylhydroxamic acid (SHAM), and thymol. Many inhibitors have been tested and surprisingly it turned out that these presently preferred inhibitors were particularly effective in preserving nitrogen.

It is also contemplated that a combination of inhibition methods may be applied, such as a combination of pH adjustment to at or below 3 with any of N-(n-butyl) thiophosphoric triamide (NBPT) (also known under the tradename Agrotain®), salicylhydroxamic acid (SHAM), and thymol. Similarly, it is contemplated that adjusting pH to 12 or above may be combined with any of N-(n-butyl) thiophosphoric triamide (NBPT) (also known under the tradename Agrotain®), salicylhydroxamic acid (SHAM), and thymol.

An embodiment where urease is inhibited to preserve nitrogen and where the concentration is performed by use of an evaporator operating at a pressure below atmospheric is a presently preferred embodiment. The inhibition is any one of the embodiments described herein. In preferred embodiments the resulting liquid contains more than 85% of the initial nitrogen in urea, more preferred more than 90%, even more preferred more than 95% and in the most preferred embodiments approximately 100% of the initial urea is preserved in the final product also during long term storage.

The present invention also provides a method for inhibiting urease in a liquid fraction of a waste matter from a mammal or for providing a urea rich liquid and/or preserving nitrogen in waste matter from a mammal, the method comprising
1) providing waste matter from a mammal, such as liquid waste or substantially liquid waste;
2) inhibiting urease present in the waste matter;
wherein the inhibition of step 2 is obtained by one or more of adjusting the pH of the waste matter to pH ≤ 3 or pH ≥ 12; using of one or more among N-(n-butyl) thiophosphoric triamide (NBPT), salicylhydroxamic acid (SHAM), and thymol and any combination.

In particular the method further comprises the step of 3) treating the urease inhibited waste matter as detailed above.

Hence, the inhibition may be as detailed in any of the embodiments described above and the inhibition may be combined with any of the embodiments of the waste treatment also described above. Hence, providing an inhibited waste matter/urea rich waste matter may be seen as an intermediate method for providing a starting material for the recovery of the nitrogen source according to the invention.

In yet an embodiment the settling takes place in a funnel shaped sedimentation tank. This shape is particularly suitable since it is the liquid fraction which is of interest in the present inventions and the solids parts suspended in the liquid constitute a minor part of the total volume. Hence, from an installation point of view and operational point of view the funnels shape is the most economical.

The present invention will now be described in greater detail with reference to the appended drawings in which
Figure 1 illustrates the process of the invention in its broadest sense.
Figure 2 illustrates an embodiment of the invention in which upstream process steps for treating liquid waste are included.
Figure 3 illustrates inhibition of urea versus urine with Agrotain®. The dotted line is urea and the solid line is urine.
Figure 4 illustrates the effect of inhibition at various pH values according to the invention and comparative, respectively.

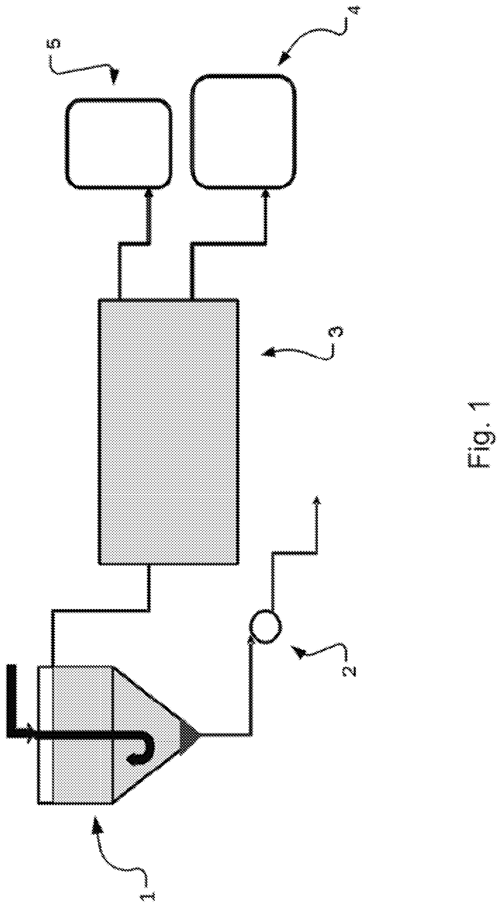

Referring now to figure 1 the process of the invention is illustrated schematically relating to waste matter obtained from animals. Liquid waste matter rich in urea (such as by being urease inhibited or free of urease) is provided by upstream processing as will be explained in greater detail below. The liquid feed is provided to the settling tank, 1, where the liquid is allowed to sediment for a suitable period of time. In the context of the present invention a suitable period of time is determined by the number of animals, such as pigs, particle size of suspended solids and tank size. Typically, but not limited to, 1 hour to 5 days.

After sedimentation the liquid supernatant is fed e.g. by a liquid pump, 2, to a low pressure evaporator, 3. From the low pressure evaporator, 3, the evaporated liquid is condensed in condensate tank, 4, and the urea rich fraction (liquid) is stored in a urea tank, 5. According to the present invention the evaporation should be performed at low pressure, i.e. below atmospheric. Suitable evaporators for the present invention should be capable of large scale evaporation; commercially available evaporators can be obtained, for example, from the firm Veolia under the trade name Evaled™. Other commercially available low pressure evaporators are suitable and known to the skilled person. The evaporation concentrates the liquid. The evaporation takes place at a pressure in the range of 1 to 90 kPa, preferred 2 to 20 kPa, more preferred 5 to 10 kPa. It is preferred that the liquid is concentrated to a urea concentration of at least 15% w/V, more preferred at least 20% g N (in urea)/L, such as 15 % to 50 % g N (in urea)/L, 20 to 30% g N (in urea)/L. According to the invention as much as 70-80% w/V of the nitrogen (in urea) in the original waste matter is recovered in the urea fraction, in preferred embodiments almost 100% w/V urea is recovered. This is contrary to the prior art methods that denitrify the manure and recover less than 20% w/V after concentration. Consequently, with these new downstream processing steps, a complete process for recovery of waste matter can be provided for which it has proven possible to retain as much nitrogen as possible also when the volume of the matter is reduced to a manageable volume. Consequently, the need for supplemental nitrogen for use, e.g., as fertilizer is reduced and a simple solution is provided for farms or plants that wish to have a state of the art environmental program in which waste is turned into a valuable product in an efficient manner and without the need for supplemental nutrients. Furthermore, the process is simple to retrofit in existing farms and plants and the operation of the process requires very little input of power.

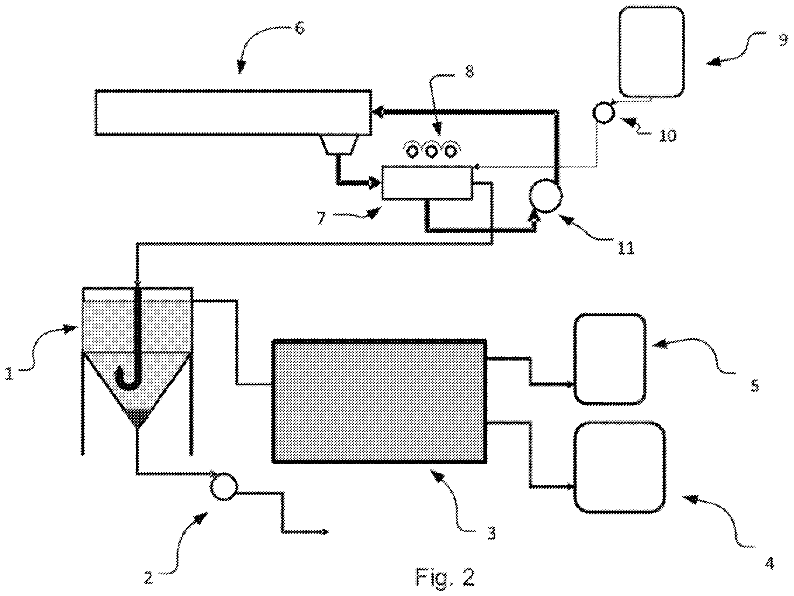

Referring now to figure 2 the invention is illustrated with a further inclusion of upstream processing and preparation of the liquid waste matter in addition to the features illustrated in figure 1. Prior to being fed to the settling tank, the liquid waste is provided by collection in a barn, 6. The collection is either by the use of conveyor belts continuously transporting the waste matter from the barn or by regular scraping of the stable floor and collecting the waste matter in an appropriate manner. In the preferred embodiment the waste matter is removed from the barn in a continuous manner by a conveyor belt and more preferred where the conveyor belt is slightly skewed allowing the liquid waste to drain from the belt. It has been found that when the belt skews specifically with an angle to the horizontal of 2° to 8°, preferably, 3° to 5°, more preferred 4°, it will substantially only be the liquid waste that drains off the belt. If the angle is higher than 8°, solids will drain too, in particular when the solids are semisolid. If the angle is lower than 2° no separation will take place. After the initial separation in liquid and solid, the liquid fraction is provided to a sump, 7, for inhibition of urease activity. In the embodiment shown, both physical and chemical inhibition takes place but it is also contemplated that the inhibition may be either physical or chemical. In the sump, 7, irradiation with UV light using an UV lamp, 8, and addition of chemical inhibitor fed from an inhibitor tank, 9, through a liquid pump, 10, takes place. From the sump, 7, inhibited liquid waste matter is transported, e.g. by use of a liquid pump, 10, or by gravity as appropriate to the settling tank, 2. It is also contemplated that the inhibition takes place before separation into solid and liquid. If a sediment is formed in the sump, 7, it may be returned to the barn, 6, through a recirculation pump, 11, for reuse in a solid treatment process.

In the following, the invention will be described in more details with reference to all embodiments of the invention.

Within the context of the present invention it is intended that the expression "waste matter" designates matter discharged from the body of a mammal, such as from an animal or human, in particular a farm animal such as pig, cow, sheep, etc. Waste matter comprises liquid excrete, e.g. urine and further waste matter includes solid excrete, e.g. faeces. In a preferred embodiment the animal is a pig.

Generally, according to the invention, the method comprises collecting waste matter from the animals whereby the waste matter to be treated is provided for processing.

Collection of waste matter from animals can be carried out in any suitable way known in the art. Preferably, waste matter is collected when the animals are concentrated in locations for their tending, e.g. for feeding, for drinking, and/or for yielding milk, or when they are concentrated in locations for transportation, or for retention before slaughtering. Other locations include locations where the conditions for producing waste matter are good, or locations where such waste-matter producing conditions could be made to stimulate the animals to urinate or defecate.

Preferably collection of waste matter takes place in stables where the animals are stocked. However, collection of waste matter can take place in the free as well, e.g. at locations where free going animals are stocked for their transportation to slaughterhouses.

Known waste matter collections facilities comprise stables wherein the animals are located and tended. Below the stables are stable basements wherein waste matter, e.g. liquid manure, faeces, litter, and other matter disposed from the animals are collected. Stable floors through which said waste matter is guided for collection and storage, detach the stables and stable basements.

According to the invention, the method also comprises inhibiting urease activity in said collected waste matter whereby it is obtained that urease-catalyzed hydrolysis of urea to ammonia is inhibited, either reversibly or irreversibly, and that loss of nitrogen and/or production of ammonia from the waste matter is substantially reduced or avoided. Consequently, the unpleasant odour and unhealthy condition due to ammonia in the stables can be reduced or avoided.

Generally, it is known to inhibit the catalytic activity of urease on hydrolysis of urea, either by removing water so that hydrolysis cannot take place, or by inhibiting the active site of the enzyme urease as such. Known methods comprise addition of inhibitors as cited e.g. in the referenced prior art, such as US 3,565,599, heat treatment, and irradiation with ionizing radiation. Generally, the method of inhibiting urease activity in said collected waste matter depends on the intended use of the urease-inhibited waste matter.

Thus, for example for urease-inhibited waste matter used in the preparation of a fertilizer to be used for disposing waste matter through the agricultural system, the urease-inhibited waste matter should be compatible with components of the prepared fertilizer. Also, urease-inhibited waste matter should not adversely affect the environment where the fertilizer is applied.

Consequently, the selection of method of inhibition of urease activity generally depends on the application.

According to prior art methods as described in WO2005/009925, said inhibition may comprise: reversibly inhibiting urease activity, irreversibly inhibiting urease activity, and/or a combination thereof whereby it is obtained that the urease inhibition can either be applied for a period wherein reversible inhibition conditions apply, or for a longer period wherein irreversible inhibition conditions apply.

Reversible inhibition conditions as described in WO2005/009925 include conditions of temporarily different pH, e.g. buffering about isoelectric point of urease about pH 5.5, temperature, or pressure, or presence of a reversible inhibitor component. After a reversible inhibition period, the inhibition condition can be returned to its previous state of no or substantially no inhibition of the urease catalytic activity. Reversible inhibition can be applied to both the urea-rich and the urea-lean fractions. That is, for example to the total waste matter before liquids and solids are separated, or, if separated, to the liquid fraction comprising small amounts of faeces (solid matter).

Hence, the method of the invention provides a method for concentrating the preserved nitrogen.

According to a particular preferred embodiment according to the present invention, the inhibition provides a complete reversible inhibition which is unexpectedly obtained by adjusting the pH of the waste matter to about pH ≤ 3 or pH ≥ 12 in step ii).

It is contemplated that any acid or base normally used for adjusting pH can be used. Such compounds are generally known to the skilled person and may for example include, but is not limited to: sulfuric acid, hydrochloric acid, HNO₃, sodium hydroxide, potassium hydroxide or KH₂PO₄ or a combination.

Irreversible inhibition conditions include conditions of permanent or essentially permanent inhibition of the urease catalytic activity. Also, a combination of reversible and irreversible inhibition of urease activity can be applied. This is particularly advantageous for applications wherein the urea-lean fraction (the substantially solid fraction) does not require addition of an irreversible inhibitor. Then the liquid waste fraction rich in urea can be treated to irreversibly inhibit the urease-catalytic activity whereas the solid fraction need not. For many applications of the urea-lean fraction, the amount of urea and the amount of water for the hydrolysis of urea are so low that only insignificant hydrolysis takes place.

The irreversible inhibition according to the invention may be selected from the group most of which are also described in WO2005/009925 comprising: urea compounds such as hydroxyurea, selenourea, phenylurea, thiourea; hydroxamates such as amino acid hydroxamates, acetohydroxamate; benzoates such as p-substituted mercuribenzoate, p-chloromercuribenzoate, p-hydroxymercuribenzoate, iodosobenzoate; sulfonates such as p-chloromercuribenzene sulfonate; imides such as N-ethylmaleimide; phosphor compounds such as phosphoramidate, phosphate; monovalent ions such as F⁻, Na⁺, and K⁺; divalent metal ions such as Hg²⁺, Cu²⁺, Fe²⁺, Co²⁺, Zn²⁺, Ni²⁺, Mn²⁺, Cd²⁺, Ag⁺, Mg²⁺ (weak), Ba²⁺, preferably Cu²⁺, Ag⁺, or Pb²⁺, or a combination thereof in form of at least one water-soluble salt, and/or at least one electrochemically-released ion; or as an oxide, preferably ferrate; trivalent ions such as As³⁺; and at least one nickel-complexing agent, preferably dimethylglyoxime, ethylenediamine, EDTA, or a combination thereof, and other compounds such as betamercaptoethanol, iodine, suramin, phenylsulfinate, KH₂PO₄ and furacin; and/or physical inhibiting means, such as UV light at suitable wavelenghts, such as in the range of 240 - 300 nm, with concentration at 270 nm, whereby it is obtained that hydrolysis of urea is not catalyzed by inhibited urease.

In a presently preferred embodiment, according to the invention irreversible inhibition is obtained by use of one or more among N-(n-butyl) thiophosphoric triamide (NBPT) available under the tradename Agrotain®, salicylhydroxamic acid (SHAM), and thymol.

It is also contemplated that the waste is treated by a combination of reversible and irreversible inhibition.

Consequently, the irreversibly urease-activity inhibited urea-rich fraction can be stored or processed without urease-catalysed conversion of urea whereby loss of nitrogen and/or generation of ammonia can be avoided.

This is particularly advantageous for long storage periods of the urea-rich fraction before it is subjected to a subsequent treatment or is stored. Another advantage is that once the urease activity is irreversibly inhibited; the urease cannot function to catalyse the hydrolysis of urea to ammonia. Hence, urease in the urea tank will be maintained under inhibition so that ammonia is not developed during storage or use.

As mentioned previously the total waste matter can be separated in solids and liquid by a number of means. If periodically scraped from the stable floor the separation may be accomplished by sedimentation of solids whereby said solids make up the solid fraction and the supernatant liquid makes up the liquid waste matter fraction.

The liquid fraction is removed from the solid by any suitable method, e.g. by surface layer pumping or by decantation. Particularly it is preferred that the sedimentation of solid waste from liquid waste of the total waste matter is carried out so that substantially the entire liquid fraction has become separated from the solid fraction.

It is contemplated that the liquid fraction and the solid fraction of the waste matter may be separated before and/or after inhibition of the urease activity. When the waste matter is removed by continuous mode using a conveyor belt, which is skewed, the majority of the liquids and solids have been separated before inhibition. In this embodiment the liquid fraction may be sedimented once more if necessary before, during or after inhibition and/or before being settled prior to evaporation.

An entire process for processing total waste matter is also contemplated wherein concurrently to the liquid treatment the solids are treated as disclosed in WO2008/104182. More specifically the solids are treated by a method comprising the steps of
a. solid waste matter from mammals is wholly or partially dissolved using an oxidizing acid,
b. solid acid-insoluble components are separated, if necessary, and
c. the liquid component is neutralized with a base

The solid acid-insoluble components are typically non faecal related components e.g. dirt, gravel etc.

The reaction time for the dissolution has to be sufficient to obtain the desired solubilization of the solids. The type and quantity of reactants is usually balanced so that the reaction time is less than 10 hours to ensure sufficient process economy. Normally, the reaction time cannot be less than 30 minutes as this would require a relatively large proportion of the oxidizing acid. The reaction time may, for example, be from approx. 1 to approx. 10 hours, preferably 3 to 6 hours. The reaction should preferably be carried out at a slight underpressure, for example approx. 800 mbar, such as 500 mbar to 900 mbar or at least below 1 bar (10 kPa). The underpressure may be provided by means of a vacuum pump serving at the same time to vent off gases from the reaction. The pressure may suitably be measured in a pipe venting the gas from the reaction container, which thereby provides a measure of the pressure in the container.

The reaction between the oxidizing acid and the faecal matter will lead to the development of heat, and therefore measurement of the temperature in the reaction container may be relevant. Accordingly, a thermometer or a temperature electrode may be arranged in connection with the reaction mixture. The heat developed may possibly be conducted away from the reaction mixture, thereby causing a simultaneous cooling of the reaction mixture. If necessary, further heat may also be supplied to advance the reaction. Both the supply to and conducting away of heat from the reaction mixture may be carried out by passing a suitable fluid, such as water or steam, at a suitable temperature through a pipe or conduit encapsulating the reaction container. The flow rate of the liquid may be adapted according to need, for example relative to the amount of heat to be conducted away or supplied.

Accordingly, the invention also discloses various embodiments of a plant for processing animal waste in which solid waste matter produced by animals as illustrated in the appended drawings. The plants, processes and sections illustrating the invention include trivial equipment such as pipes, liquid pumps etc. which are well known to the skilled person.

Embodiments of the invention will now be illustrated by means of the following non limiting examples.

### Examples

### Example 1

An initial study was made to investigate the effect of testing the various inhibition in vivo versus in vitro before further tests were made.

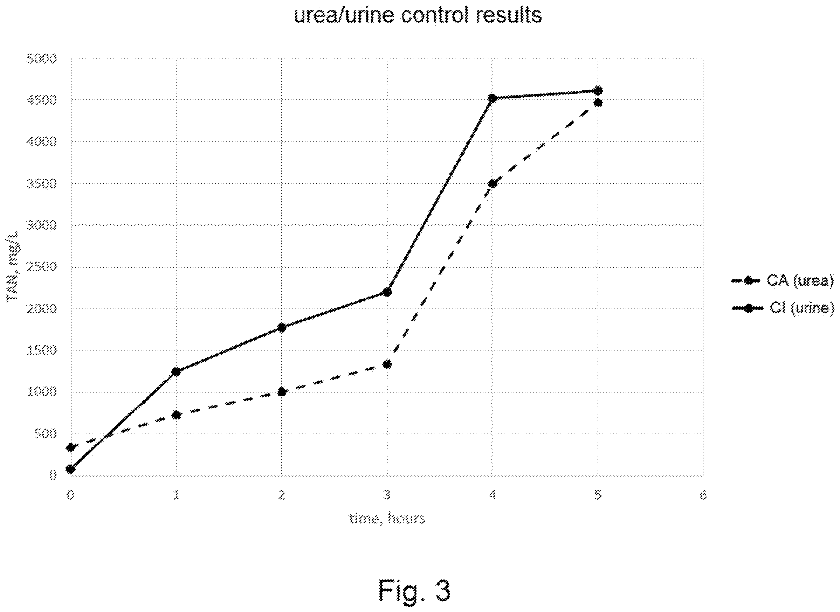

Hence, the TAN value (total ammonical nitrogen) was measured in a sample where the same amount of Agrotain® was added to a sample of urea and urine respectively. The results were obtained as described below in example 2 and also illustrated in figure 3.

From the figure it is apparent that both samples follow the same path and therefore it was concluded that the in vitro testing of urea would be representative for the effect on urine as well.

### Example 2

To assess the effectiveness of selected urease inhibitors at preserving urea in swine urine over a six-week period, a set of experiments were established. The experiments were run in triplicate and average results are rendered in the below Table 1.

The inhibition selected for the experiment were inhibitors Agrotain® ((N-(n-butyl) thiophosphoric triamide (NBPT)), SHAM (salicylhydroxamic acid), thymol, and at pH 3, and finally at pH 12.

The levels of each inhibitor used in the experiment were as follows:
Agrotain®, 50 mg/L;
SHAM, 50.5 mg/L and 100.9 mg/L;
thymol, 1.5 mg/L.

A set of controls was included to test urease activity over the first eight hours of the experiment and then after six weeks. At each time interval samples were analyzed by standard methods for total Kjeldhal nitrogen (TKN) and total ammonical nitrogen (TAN) while urea was determined as the difference between the two (i.e. TKN - TAN).

In an effort to reduce variability and increase confidence in results, the experiment used a 1.0 molar urea solution rather than swine urine, although in one experimental series Agrotain® (see also example 1) was added to swine urine collected from sows at the NCSU Lake Wheeler Road Field Laboratory Swine Education Unit for verifying the validity of the in vitro results in vivo.

Jack Bean urease was added to all experimental units to ensure that urease was present in sufficient quantity for the breakdown of the urea.

Urea solution was prepared as a 1 molar solution by dissolving 60.06 g urea per litre of water.

Agrotain® was diluted according to manufacturer's recommendation of 2 quarts per ton of manure.

Thymol was dissolved in ethanol at the ratio of 1 mg per mL.

Salicylhydroxamic acid (SHAM) was prepared at a 1:1 concentration of SHAM in 0.1 molar Tris-HCL buffer at pH 7.5.

The pH adjustments were made with 1.0 M sulfuric acid or 1.0 M sodium hydroxide, respectively. It is however contemplated that any acid or base can be used.

Urease was prepared by dissolving 100 mg of the Jack Bean enzyme (40,318 units per gram) in 125 mL phosphate buffer at pH 7.0. Application to the treatments was at the rate of 5.0 mL per 100 mL or 161 units per mL urea solution or urine.

The various treatments were added to 100 mL of the urea solution (and urine in the case of Agrotain®), and the urease enzyme was added in random order. The obtained solutions were stirred to ensure distribution, sealed and stored under ambient conditions.

**Table 1.**

| **Treatment** | **Time** | **TKN, mg/L** | **TAN, mg/L** | **Urea, mg/L** | **Urea/TKN %** |
|---|---|---|---|---|---|
| **Control** | Urea 8h | 13122 | 75 | 13047 | 99 |
| | Urea week 6 | 19027 | 16400 | 2623 | 14 |
| | Urine 8h | 7115 | 338 | 6777 | 95 |
| | Urine week 6 | 5681 | 4688 | 993 | 17 |
| **Thymol** in **urea, 1.5 mg/L** | Week 1 | no data | 4751 | no data | no data |
| | Week 2 | 26694 | 4928 | 21766 | 82 |
| | Week 3 | 26109 | 4756 | 21353 | 82 |
| | Week 4 | 20045 | 4240 | 15805 | 79 |
| | Week 5 | 22503 | 4036 | 18467 | 82 |
| | Week 6 | 24778 | 4927 | 19851 | 80 |
| **Agrotain in urea, 50 mg/L** | Week 1 | no data | 1723 | no data | no data |
| | Week 2 | 10686 | 2248 | 8438 | 79 |
| | Week 3 | 10622 | 2763 | 7859 | 74 |
| | Week 4* | 10718 | 309 | 10409 | 97 |
| | Week 5 | 26834 | 4040 | 22794 | 85 |
| | Week 6 | 24638 | 3040 | 21598 | 88 |
| **Agrotain in urine, 50 mg/L** | Week 1 | no data | 1087 | no data | no data |
| | Week 2 | 6302 | 2310 | 3992 | 63 |
| | Week 3 | 7725 | 2617 | 5108 | 66 |
| | Week 4 | 4721 | 1958 | 2763 | 59 |
| | Week 5 | 5858 | 2768 | 3090 | 53 |
| | Week 6 | 5645 | 2797 | 2848 | 50 |
| **SHAM in urea, 50.5 mg/L** | Week 1 | 18450 | 2527 | 15923 | 86 |
| | Week 2 | 23091 | 3783 | 19307 | 84 |
| | Week 3* | 23366 | 385 | 22981 | 98 |
| | Week 4 | 25625 | 4864 | 20761 | 81 |
| | Week 5 | 26378 | 4579 | 21798 | 83 |
| | Week 6 | 26098 | 5012 | 21085 | 81 |
| **SHAM in urea, 100.9 mg/L** | Week 1 | 17320 | 4627 | 12693 | 73 |
| | Week 2 | 21956 | 6342 | 15615 | 71 |
| | Week 3* | 19856 | 695 | 19162 | 97 |
| | Week 4 | 22455 | 8141 | 14314 | 64 |
| | Week 5 | 25466 | 7780 | 17687 | 69 |
| | Week 6 | 22443 | 8570 | 13873 | 62 |
| **pH = 3.0** | Week 1 | 24895 | 12 | 24883 | ∼100 |
| | Week 2 | 27341 | 18 | 27323 | ∼100 |
| | Week 3 | 27316 | 22 | 27294 | ∼100 |
| | Week 4 | 29225 | 26 | 28199 | ∼100 |
| | Week 5 | 27948 | 29 | 27919 | ∼100 |
| | Week 6 | 27753 | 37 | 27716 | ∼100 |
| **pH = 12.0** | Week 1 | no data | 142 | no data | no data |
| | Week 2** | 535 | 75 | 460 | 86 |
| | Week 3** | 106 | 52 | 54 | 51 |
| | Week 4** | 536 | 62 | 474 | 88 |
| | Week 5 | 29431 | 65 | 29366 | ∼100 |
| | Week 6 | 22066 | 11 | 22055 | ∼100 |

| | | | | | |
|---|---|---|---|---|---|
| *the results in week 3 for SHAM and week 4 for Agrotain® in urea deviate from the remaining results and have been disregarded **without the wish to be bound by any theory it is currently believed that the first results from the high pH N-determinations are not representative of the real values due to sensitivity issues with the method. Over time (and also after longer storage, results no shown) the TAN/TKN values are in line with the results of weeks 5 and 6 illustrated above and these are believed to be the true values. | | | | | |

As appears from the results, a considerable inhibition of urea breakdown was attained with all the tested treatments. In particular the pH treatments were surprisingly effective. The effect of pH was therefore further investigated.

### Example 3

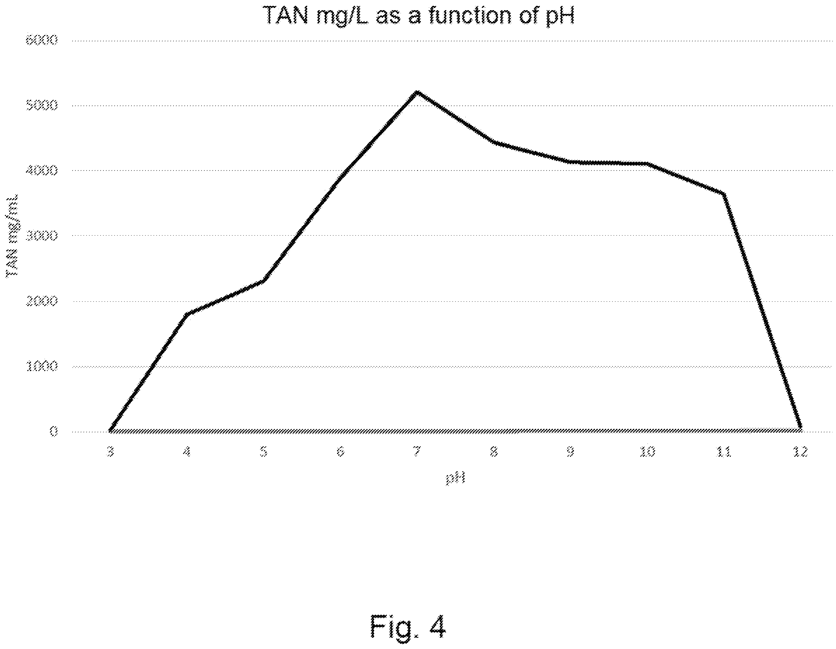

Example 3 is a comparative example showing the effect of pH outside the preferred range. pH was adjusted as appears from the first column of table 2 the result of the pH 3 and 12 treatments of example 2 is included as well. The tests were run similar to that of example 2 and nitrogen content was measured after two weeks. The results appear from table 2 below and figure 4. For comparison the result for the pH 12 measurement is the one from week 5 since the measurement method is compromised at high pH and no meaningful calculation could be made for week 2.

**Table 2**

| pH adjusted to | TKN, mg/L | TAN, mg/L |
|---|---|---|
| 3 | 27341 | 18 |
| 4 | 28012 | 1795 |
| 5 | 27266 | 2305 |
| 6 | 26074 | 3884 |
| 7 | 27703 | 5206 |
| 8 | 27428 | 4432 |
| 9 | 27503 | 4131 |
| 10 | 26355 | 4105 |
| 11 | 24981 | 3640 |
| 12 | 29431 | 65 |
| Initial urea, pH 7,05 | 28729 | 2 |

As can be seen from the results the effect of adjusting initial pH is significant when pH is decreased from 4 to 3 such that the amount of ammonia goes from 1795 mg/L to 18 mg/L. Similarly, when pH is increased from 11 to 12 a significant decrease in ammonia formation occurs. The relation between TAN and pH is illustrated in figure 4.

## Claims

1. A method for treating a liquid fraction of a waste matter from a mammal, or for preserving nitrogen in waste matter from a mammal, the method comprising
a) providing a liquid fraction of a waste matter from a mammal, said fraction being urea rich;
b) allowing the fraction to settle to provide a supernatant and a sediment;
c) feeding the supernatant to an evaporating unit; and
d) subjecting the supernatant to an evaporating step, wherein the evaporating step takes place at a pressure below atmospheric.

2. A method according to claim 1, wherein the pressure below atmospheric is between 1 and 20 kPa, preferably 2 to 10 kPa.

3. A method according to claim 2, wherein the evaporating step provides a urea fraction and a condensate fraction, said condensate fraction substantially comprising water.

4. A method according to anyone of claims 1 to 3, wherein the liquid fraction of a waste matter is provided by a method comprising the steps of
i) collecting waste matter from a mammal;
ii) inhibiting urease activity in the collected waste matter;
iii) separating the urease-activity inhibited waste matter to provide the urea-rich liquid fraction of a waste matter from a mammal, and a urea-lean fraction.

5. A method according to claim 4, wherein the collected waste matter is collected from a barn in which a separation means is installed underneath a stable floor having slats and in which the separation means comprises a conveyor belt or a pipe and scraper system, said conveyor belt conveying the waste matter for processing in a continuous manner.

6. A method according to claim 5, wherein the conveyor belt is installed with a slight inclination, so that the inclination of the belt relative to the horizontal has an angle of 2° to 8°, preferably, 3° to 5°, more preferred 4°.

7. A method according to claim 6, wherein the waste matter of step i) is substantially liquid and is collected as liquid waste matter drained from the conveyor belt having a slight inclination.

8. A method according to anyone of the claims 4-7, wherein the inhibition of step ii) is obtained by inhibiting the waste matter by physical or chemical means or a combination of both.

9. A method according to claim 8, wherein the physical inhibition is an UV light, preferably in at least two different wavelengths.

10. A method according to claim 8, wherein the chemical inhibition is obtained by the use of reversible and/or irreversible inhibition.

11. A method according to claim 10, wherein reversible and/or irreversible inhibition is obtained by adjusting the pH of the waste matter to pH ≤ 3 or pH ≥ 12.

12. A method according to claim 11, wherein the reversible inhibition is obtained by use of sulfuric acid, hydrochloric acid, HNO₃, sodium hydroxide, potassium hydroxide or KH₂PO₄ or a combination thereof.

13. A method according to claim 10 or 11, wherein irreversible inhibition is obtained by use of one or more among N-(n-butyl) thiophosphoric triamide (NBPT), salicylhydroxamic acid (SHAM), and thymol.

14. A method according to claim 13, wherein the irreversible inhibitor is salicylhydroxamic acid and the amount of acid added is in the range of 45-55 mg/L, more preferred about 50 mg/L.

15. A method for inhibiting urease in a liquid fraction of a waste matter from a mammal or for providing a urea rich liquid and/or preserving nitrogen in waste matter from a mammal, the method comprising
1) providing waste matter from a mammal, such as liquid waste or substantially liquid waste;
2) inhibiting urease present in the waste matter;
wherein the inhibition of step 2 is obtained by one or more of adjusting the pH of the waste matter to pH ≤ 3 or pH ≥ 12; using of one or more inhibitors among N-(n-butyl) thiophosphoric triamide (NBPT), salicylhydroxamic acid (SHAM), thymol, sulfuric acid, hydrochloric acid, HNO₃, sodium hydroxide, potassium hydroxide or KH₂PO₄ and any combination thereof.
3) treating the urease inhibited waste matter obtained in step 2 according to the method of anyone of claims 1-3.

## Patentansprüche

1. Verfahren zur Behandlung einer flüssigen Fraktion eines Ausscheidungsprodukts von einem Säugetier oder zum Konservieren von Stickstoff in einem Ausscheidungsprodukt von einem Säugetier, wobei das Verfahren Folgendes umfasst:
a) das Bereitstellen einer flüssigen Fraktion eines Ausscheidungsprodukts von einem Säugetier, wobei die Fraktion harnstoffreich ist,
b) das Absetzenlassen der Fraktion unter Bereitstellung eines Überstands und eines Sediments,
c) das Einspeisen des Überstands in eine Verdampfereinheit und
d) das Unterziehen des Überstands eines Verdampfungsschritts, wobei der Verdampfungsschritt bei einem Druck unter Normaldruck stattfindet.

2. Verfahren nach Anspruch 1, wobei der Druck unter Normaldruck zwischen 1 und 20 kPa liegt und vorzugsweise 2 bis 10 kPa beträgt.

3. Verfahren nach Anspruch 2, wobei der Eindampfungsschritt eine Harnstofffraktion und eine Kondensatfraktion bereitstellt, wobei die Kondensatfraktion im Wesentlichen Wasser umfasst.

4. Verfahren nach einem der Ansprüche 1 bis 3, wobei die flüssige Fraktion eines Ausscheidungsprodukts durch ein Verfahren bereitgestellt wird, das die folgenden Schritte umfasst:
i) das Sammeln von Ausscheidungsprodukten von einem Säugetier,
ii) das Inhibieren der Ureaseaktivität in den gesammelten Ausscheidungsprodukten,
iii) das Abtrennen des Ausscheidungsprodukts mit inhibierter Ureaseaktivität unter Bereitstellung der harnstoffreichen flüssigen Fraktion eines Ausscheidungsprodukts von einem Säugetier und einer harnstoffarmen Fraktion.

5. Verfahren nach Anspruch 4, wobei das gesammelte Ausscheidungsprodukt von einem Stall gesammelt wird, bei dem unter einem Stallboden mit Schlitzen eine Abtrennvorrichtung installiert ist und bei dem die Abtrennvorrichtung ein Förderband oder eine Leitung und ein Schabsystem umfasst, wobei das Förderband das Ausscheidungsprodukt kontinuierlich zur Verarbeitung befördert.

6. Verfahren nach Anspruch 5, wobei das Förderband mit einer leichten Neigung installiert ist, so dass die Neigung des Förderbands, bezogen auf die Horizontale, einen Winkel von 2° bis 8°, vorzugsweise 3° bis 5°, besonders bevorzugt 4° aufweist.

7. Verfahren nach Anspruch 6, wobei das Ausscheidungsprodukt aus Schritt i) im Wesentlichen flüssig ist und als flüssiges Ausscheidungsprodukt gesammelt wird, das von dem Förderband mit einer leichten Neigung abfließt.

8. Verfahren nach einem der Ansprüche 4-7, wobei man die Inhibierung von Schritt ii) erzielt, indem man das Ausscheidungsprodukt physikalisch oder chemisch oder mittels einer Kombination von beidem inhibiert.

9. Verfahren nach Anspruch 8, wobei es sich bei der physikalischen Inhibierung um ein UV-Licht handelt, vorzugsweise in mindestens zwei verschiedenen Wellenlängen.

10. Verfahren nach Anspruch 8, wobei die chemische Inhibierung durch Anwendung von reversibler und/oder irreversibler Inhibierung erzielt wird.

11. Verfahren nach Anspruch 10, wobei die reversible und/oder irreversible Inhibierung durch Einstellen des pH-Wertes des Ausscheidungsprodukts auf pH ≤ 3 oder pH ≥ 12 erzielt wird.

12. Verfahren nach Anspruch 11, wobei die reversible Inhibierung durch die Anwendung von Schwefelsäure, Salzsäure, HNO₃, Natriumhydroxid, Kaliumhydroxid oder KH₂PO₄ oder einer Kombination davon erzielt wird.

13. Verfahren nach Anspruch 10 oder 11, wobei die irreversible Inhibierung durch die Anwendung von N-(n-Butyl)thiophosphorsäuretriamid (NBPT), Salicylhydroxamsäure (SHAM) und/oder Thymol erzielt wird.

14. Verfahren nach Anspruch 13, wobei es sich bei dem irreversiblen Inhibitor um Salicylhydroxamsäure handelt und die Menge an zugesetzter Säure im Bereich von 45-55 mg/l, besonders bevorzugt etwa 50 mg/l liegt.

15. Verfahren zum Inhibieren von Urease in einer flüssigen Fraktion eines Ausscheidungsprodukts von einem Säugetier oder zur Bereitstellung einer harnstoffreichen Flüssigkeit und/oder zur Konservierung von Stickstoff in Ausscheidungsprodukten von einem Säugetier, wobei das Verfahren Folgendes umfasst:
1) die Bereitstellung eines Ausscheidungsprodukts von einem Säugetier wie einem flüssigen Ausscheidungsprodukt oder einem im Wesentlichen flüssigen Ausscheidungsprodukt,
2) das Inhibieren der in dem Ausscheidungsprodukt vorhandenen Urease,
wobei die Inhibierung von Schritt 2 durch Einstellen des pH-Wertes des Ausscheidungsprodukts auf pH ≤ 3 oder pH ≥ 12 und/oder die Anwendung eines oder mehrerer Inhibitoren ausgewählt aus N-(n-Butyl)thiophosphorsäuretriamid (NBPT), Salicylhydroxamsäure (SHAM), Thymol, Schwefelsäure, Salzsäure, HNO₃, Natriumhydroxid, Kaliumhydroxid oder KH₂PO₄ und einer beliebigen Kombination davon erzielt wird,
3) das Behandeln des in Schritt 2 erhaltenen ureaseinhibierten Ausscheidungsprodukts nach dem Verfahren nach einem der Ansprüche 1-3.

## Revendications

1. Procédé de traitement d'une fraction liquide de déchets provenant d'un mammifère, ou de préservation de l'azote dans des déchets provenant d'un mammifère, le procédé comprenant
a) la fourniture d'une fraction liquide de déchets provenant d'un mammifère,
ladite fraction étant riche en urée ;
b) la décantation de la fraction pour obtenir un surnageant et un sédiment ;
c) l'alimentation du surnageant dans une unité d'évaporation ; et
d) la soumission du surnageant à une étape d'évaporation, dans lequel l'étape d'évaporation est conduite à une pression inférieure à la pression atmosphérique.

2. Procédé selon la revendication 1, dans lequel la pression inférieure à la pression atmosphérique est comprise entre 1 et 20 kPa, de préférence 2 à 10 kPa.

3. Procédé selon la revendication 2, dans lequel l'étape d'évaporation produit une fraction d'urée et une fraction de condensat, ladite fraction de condensat comprenant sensiblement de l'eau.

4. Procédé selon l'une quelconque des revendications 1 à 3, dans lequel la fraction liquide de déchets est produite par un procédé comprenant les étapes de
i) collecte de déchets à partir d'un mammifère ;
ii) inhibition de l'activité uréase dans les déchets collectés ;
iii) séparation des déchets avec inhibition de l'activité uréase pour produire la fraction liquide riche en urée de déchets provenant d'un mammifère, et une fraction pauvre en urée.

5. Procédé selon la revendication 4, dans lequel les déchets collectés sont collectés à partir d'une étable dans laquelle un moyen de séparation est installé au-dessous d'un plancher d'étable comportant des lamelles et dans lequel le moyen de séparation comprend un bande de transport ou un système de tuyau et de racloir, ladite bande de transport transportant les déchets pour traitement de manière continue.

6. Procédé selon la revendication 5, dans lequel la bande de transport est installée avec une légère inclinaison, de sorte que l'inclinaison de la bande par rapport à l'horizontale ait un angle de 2° à 8°, de préférence, 3° à 5°, plus préférablement 4°.

7. Procédé selon la revendication 6, dans lequel les déchets de l'étape i) sont sensiblement liquides et sont collectés sous forme de déchets liquides drainés depuis la bande de transport ayant une légère inclinaison.

8. Procédé selon l'une quelconque des revendications 4 à 7, dans lequel l'inhibition de l'étape ii) est obtenue par inhibition des déchets par des moyens physiques ou chimiques ou une combinaison des deux.

9. Procédé selon la revendication 8, dans lequel l'inhibition physique est une lumière UV, de préférence à au moins deux longueurs d'onde différentes.

10. Procédé selon la revendication 8, dans lequel l'inhibition chimique est obtenue par l'utilisation d'un inhibition réversible et/ou irréversible.

11. Procédé selon la revendication 10, dans lequel l'inhibition réversible et/ou irréversible est obtenue par ajustement du pH des déchets à pH ≤ 3 ou pH ≥ 12.

12. Procédé selon la revendication 11, dans lequel l'inhibition réversible est obtenue par utilisation d'acide sulfurique, acide chlorhydrique, HNO₃, hydroxyde de sodium, hydroxyde de potassium ou KH₂PO₄ ou une combinaison de ceux-ci.

13. Procédé selon la revendication 10 ou 11, dans lequel l'inhibition irréversible est obtenue par utilisation de l'un ou plusieurs parmi le triamide N-(n-butyl)thiophosphorique (NBPT), l'acide salicylhydroxamique (SHAM) et le thymol.

14. Procédé selon la revendication 13, dans lequel l'inhibiteur irréversible est l'acide salicylhydroxamique et la quantité d'acide ajoutée est dans la plage de 45 à 55 mg/l, plus préférablement d'environ 50 mg/l.

15. Procédé d'inhibition d'uréase dans une fraction liquide de déchets provenant d'un mammifère ou de production d'un liquide riche en urée et/ou de préservation de l'azote dans des déchets provenant d'un mammifère, le procédé comprenant
1) la fourniture de déchets provenant d'un mammifère, tels que des déchets liquides ou des déchets sensiblement liquides ;
2) l'inhibition de l'uréase présente dans les déchets ; dans lequel l'inhibition de l'étape 2 est obtenue par l'un ou plusieurs parmi l'ajustement du pH des déchets à pH ≤ 3 ou pH ≥ 12 ; l'utilisation d'un ou plusieurs inhibiteurs parmi le triamide N-(n-butyl)thiophosphorique (NBPT), l'acide salicylhydroxamique (SHAM), le thymol, l'acide sulfurique, l'acide chlorhydrique, HNO₃, l'hydroxyde de sodium, l'hydroxyde de potassium ou KH₂PO₄ et une combinaison quelconque de ceux-ci,
3) le traitement des déchets avec inhibition d'uréase obtenus dans l'étape 2 selon le procédé de l'une quelconque des revendications 1 à 3.
